# EUROPÄISCHE PATENTSCHRIFT

(11) **EP 3 004 923 B1**
(45) Veröffentlichungstag und Bekanntmachung des Hinweises auf die Patenterteilung: **25.12.2019**
(21) Anmeldenummer: 14753003.4
(22) Anmeldetag: 02.06.2014
(51) Int. Cl.: G01S 13/88, H01Q 25/00, G01S 7/00, G01S 13/42, H01Q 21/08, H01Q 21/28, H01Q 3/26, G01S 7/03, G01S 13/02, G01S 7/02, G01S 13/94

(54) **MULTIFUNKTIONALE RADARANORDNUNG**
MULTI-FUNCTIONAL RADAR ASSEMBLY
SYSTÈME DE RADAR MULTIFONCTION

(30) Priorität: 05.06.2013 DE 102013105809
(43) Veröffentlichungstag der Anmeldung: 13.04.2016
(73) Patentinhaber: Airbus Defence and Space GmbH, 85521 Ottobrunn (DE)
(72) Erfinder: PRECHTEL, Ulrich, 85521 Ottobrunn (DE); MEUSLING, Askold, 85521 Ottobrunn (DE)
(74) Vertreter: LKGLOBAL Lorenz & Kopf PartG mbB Patentanwälte
(86) Internationale Anmeldenummer: PCT/DE2014/000269
(87) Internationale Veröffentlichungsnummer: WO 2014/194877

(56) Entgegenhaltungen:
- DE-A1-102004 059 915
- DE-A1-102010 064 348
- U. PRECHTEL ET AL: "Short-range MIMO radar system considerations", 2012 6TH EUROPEAN CONFERENCE ON ANTENNAS AND PROPAGATION (EUCAP), 1. März 2012 (2012-03-01), Seiten 1742-1745, XP055147564, DOI: 10.1109/EuCAP.2012.6206599 ISBN: 978-1-45-770919-7
- SHERIF SAYED ET AL: "A Novel Active Real-Time Digital-Beamforming Imager for Personnel Screening", SYNTHETIC APERTURE RADAR, 2012. EUSAR. 9TH EUROPEAN CONFERENCE ON, 26. April 2012 (2012-04-26), Seiten 178-181, XP055145408, ISBN: 978-3-80-073404-7 in der Anmeldung erwähnt

## Beschreibung

Die Erfindung betrifft eine Radaranordnung zum Abstrahlen und/oder Empfangen wenigstens eines Radarstrahls, die eine Antennenanordnung aufweist. Die Antennenanordnung weist wiederum eine Sendeantenneneinrichtung mit einer Mehrzahl von Sendeantennenelementen auf. Zur Erzeugung von Ansteuersignalen für die Sendeantennenelemente weist die Radaranordnung eine Ansteuerungseinrichtung auf. Die Antennenanordnung weist eine erste Empfangsantenneneinrichtung auf, die eine Mehrzahl von Empfangsantennenelementen aufweist. Die Sendeantenneneinrichtung weist ein erstes Antennensegment und ein zweites Antennensegment auf, die voneinander beabstandet angeordnet sind und jeweils eine Mehrzahl von entlang einer Gerade angeordneten Sendeantennenelementen aufweisen.

Radaranordnungen der eingangs genannten Art finden insbesondere in Flugzeugen oder Bodenüberwachungsradaren Anwendung. Sie werden beispielsweise dazu verwendet, andere Flugzeuge zu orten und dadurch Kollisionen zu vermeiden. Eine weitere Einsatzmöglichkeit betrifft die Abtastung der Erdoberfläche vor dem Flugzeug, beispielsweise zur verbesserten Information des Piloten beim Tiefflug. Auch die Automatisierung von Landesystemen wird durch ein derartiges Radar vereinfacht.

Nicht zuletzt ist es mit modernen Radarsystemen möglich, Informationen mit hohen Bandbreiten zwischen Radarsystemen zu übertragen. Durch die Möglichkeit, eine starke Richtcharakteristik zu verwenden, können dadurch auch spontane Richtfunkstrecken und mesh networks aufgebaut werden.

Die Auslegung von Radarsystemen erfolgt heute für spezifische Anforderungen, das heißt diese sind entweder für große Reichweiten oder für instantane Bildgebung ausgelegt. Flugzeuge und Helikopter, aber auch verschiedene Landanwendungen benötigen oft mehrere Funktionen parallel, so dass in der Praxis zwei Systeme installiert werden.

Für große Reichweiten sind AESA-Radare bekannt. Für bildgebende Systeme werden oft MIMO-Radare mit unterschiedlichen ausgedünnten Antennenanordnungen verwendet.

Aus der DE 10 2004 040 015 A1 ist es bekannt, mittels einer Sendeantenne Radarsignale auf unterschiedlichen Frequenzen zu erzeugen, deren Reflexionen mittels zweier, parallel zueinander ausgerichteter Empfangsantennen empfangen werden, deren Abstand so gewählt wird, dass die Grenzen des Eindeutigkeitsbereichs die Seitenkeulen schneiden und dass eine Detektion des reflektierten Objekts mittels einer vektoriellen Summe der Signale der Anfangsantennen vorgenommen wird.

In EP 1 784 893 B1 wird vorgeschlagen, einzelne Bereiche eines AESA-Rasters, das gewöhnlich vollständig mit Sende-/Empfangsantennenelementen ausgestaltet ist, mit reinen Empfangs- oder reinen Sendeantennenelementen auszugestalten.

AHMED, S. S., SCHIESSL, A.: "A Novel Active Real-Time Digital-Beamforming Imager for Personnel Screening". In: Synthetic Aperture Radar, 2012. EUSAR. 9th European Conference on Date 23-26 April 2012, S. 178-181 und AHMED, S. S. et. al.: "A Novel Fully Electronic Active Real-Time Imager Based on a Planar Multistatic Sparse Array". In: IEEE TRANSACTION ON MICROWAVE THEORY AND TECH-NIQUES, VOL. 59, NO. 12, DECEMBER 2011, S. 3567-3576 betreffen eine MIMO-Antennenanordnung, bei der jeweils zwei Sende- und Empfangselementzeilen paarweise gegenüberliegend angeordnet sind und eine quadratische Antennenanordnung bilden. Die Antennenanordnung wird mittels einer Ansteuereinrichtung zu bildgebenden Abtastung eines Objekts angesteuert. Mehrere Antennenanordnungen sind in einer Ebene nebeneinander angeordnet, um die durch die Bildgebung abgedeckte Fläche und die Auflösung zu vergrößern.

DE 10 2010 064 348 A1 beschreibt einen Radarsensor für Kraftfahrzeuge, mit einer Antennenanordnung, die durch eine Steuereinrichtung derart ansteuerbar ist, dass sie eine zeitlich variierende Richtcharakteristik aufweist.

Die Erfindung geht auf die Aufgabe zurück, eine Radaranordnung der eingangs genannten Art zu schaffen, die bei geringer Größe flexibel einsetzbar ist.

Die Aufgabe wird durch eine Radaranordnung gemäß Patentanspruch 1 gelöst, wobei erfindungsgemäß jedes der Antennensegmente der eingangs genannten Radaranordnung durch ein Zusammenwirken der Sendeantennenelemente jeweils eine Gruppenantenne (antenna array/antenna line) bildet, mit der jeweils ein gemeinsamer Radarstrahl erzeugbar ist und wobei die Ansteuerungseinrichtung zur Erzeugung der Ansteuersignale derart ausgestaltet ist, dass jeder der von den Antennensegmenten erzeugten Radarstrahlen separat schwenkbar ist.

Vorteilhafte Ausgestaltungen der erfindungsgemäßen Radaranordnung sind Gegenstand der Unteransprüche.

Die erfindungsgemäße Radaranordnung ist sowohl dafür geeignet, Radarabtastung über große Entfernungen durchzuführen, als auch mit hoher Auflösung nahegelegene Ziele abzutasten. Dadurch, dass lediglich eine Empfangsantenneinrichtung vorgesehen wird, benötigt die Radaranordnung wesentlich weniger Platz und hat ein geringeres Gewicht als die bisher zum Einbau in Luftfahrzeuge bekannten Radaranordnungen, bei denen gewöhnlich mehrere unabhängige Systeme zum Einsatz kommen. Darüber hinaus weist die Empfangsantenneinrichtung einen einfachen Aufbau auf, so dass sie kostengünstig bereitgestellt werden können. Dadurch, dass die Sendeantennenelemente der Sendeantenneneinrichtung in zwei Segmenten beziehungsweise in zwei Zeilen angeordnet sind, wobei die von den Segmenten erzeugten Radarstrahlen jeweils mittels der Ansteuerungseinrichtung durch Bildung einer Gruppenantenne elektronisch schwenkbar sind, wird gegenüber einer klassischen MIMO-Anordnung ein Reichweitengewinn erzielt. Gegenüber einer klassischen AESA-Anordnung ist der Aufbau vereinfacht, da die Sendeantennenelemente und die Empfangsantennenelemente komplett getrennt sind.

Zur Verbesserung der Auflösung und der Reichweite kann die Antennenanordnung eine zweite Empfangsantenneinrichtung aufweisen.

Die Empfangsantenneinrichtungen können an einander gegenüberliegenden Seiten der Sendeantenneneinrichtung angeordnet sein. Dadurch wird eine besonders kompakte Bauweise erreicht. Darüber hinaus weisen die Empfangsantenneinrichtungen in diesem Fall dieselbe Ausrichtung wie die Sendeantenneneinrichtung auf, so dass die analytischen Anforderungen an die Bildrekonstruktion verringert werden.

Die Sendeantenneneinrichtung kann ein drittes Antennensegment aufweisen. Ein zusätzliches Antennensegment kann die Reichweite und/oder die Auflösung der Radaranordnung vergrößern.

Das dritte Antennensegment kann zwischen den ersten Antennensegment und dem zweiten Antennensegment angeordnet sein. Dadurch wird eine besonders kompakte Bauweise erreicht.

Wenigstens eines der Antennensegmente kann mehrere Subsegmente aufweisen, die jeweils eine Gruppenantenne bilden können. Dies ermöglicht es, weitere unabhängige und durch Kodierung oder Modulation unterscheidbare Radarstrahlen gleichzeitig zu erzeugen und somit unabhängig voneinander mehrere unterschiedliche Radaraufgaben durchzuführen. Die Ansteuerungseinrichtung kann derart ausgestaltet sein, dass jedes der Subsegmente separat schwenkbar ist. In einer Ausgestaltung weist eines der Antennenelemente zwei Subsegmente auf.

Mehrere der Sendeantennenelemente können durch ein Verteilnetzwerk miteinander zu einem Antennensegment und/oder einem Subsegment verbunden sein. Ein derartiges Verteilnetzwerk vereinfacht die Ansteuerung.

In einer weiteren Ausgestaltung weist die Radaranordnung eine Ansteuerungseinrichtung auf, die zur Ansteuerung eines der Antennensegmente für jedes der Sendeantennenelemente eine Signalformungseinrichtung aufweist. Eine derartige Ansteuerungseinrichtung ermöglicht es, neben einer besonders präzise und einfach durchzuführenden Richtungssteuerung des Radarstrahls, während des Betriebs flexibel die Aufteilung der Subsegmente zu verändern.

Die Radaranordnung kann mehrere Antennenanordnungen, insbesondere zwei Antennenanordnungen aufweisen. Dadurch kann eine weitere Reichweiten- und/oder Auflösungserhöhung erzielt werden. Je nach Ausrichtung der Antennenanordnungen kann auch der Blickwinkel der Radaranordnung vergrößert werden.

Vorteilhaft sind die Antennenanordnungen aneinander angrenzend angeordnet. Dadurch wird es erleichtert, die von den verschiedenen Antennenanordnungen ermittelten Radarbilder zusammenzufügen.

Die Antennenanordnungen können relativ zueinander geneigt sein, insbesondere zwischen sich einen Winkel zwischen 185° und 270° einschließen. Dadurch können unterschiedliche, häufig verwendete Blickwinkel vereinfacht abgedeckt werden. Auch ein Winkel zwischen 90° und 270° ist denkbar.

In einer besonders vorteilhaften Ausgestaltung schließen die Antennenanordnungen zwischen sich einen Winkel zwischen 120° und 170° ein. Eine derartige Radaranordnung ist insbesondere für Luftfahrzeuge vorteilhaft, wenn diese ein Flug- und ein Landeradar benötigen.

Die Erfindung wird nachfolgend anhand von Ausführungsbeispielen näher erläutert, die in den beigefügten Zeichnungen schematisch dargestellt sind. Es zeigen im Einzelnen:
- Fig. 1: den Aufbau einer ersten Ausführungsform der Radaranordnung;
- Fig. 2: den Aufbau einer zweiten Ausführungsform der Radaranordnung;
- Fig. 3: den Aufbau einer dritten Ausführungsform der Radaranordnung;
- Fig. 4: den Aufbau einer vierten Ausführungsform der Radaranordnung;
- Fig. 5: ein Detail einer möglichen Ansteuerung der dritten Ausführungsform;
- Fig. 6: ein Detail einer möglichen Ansteuerung der ersten bis vierten Ausführungsform;
- Fig. 7: ein Detail einer möglichen Ansteuerung der ersten bis vierten Ausführungsform;
- Fig. 8: eine Frontsicht auf den Aufbau einer fünften Ausführungsform der Radaranordnung und
- Fig. 9: eine Seitenansicht der Radaranordnung aus Fig. 8.

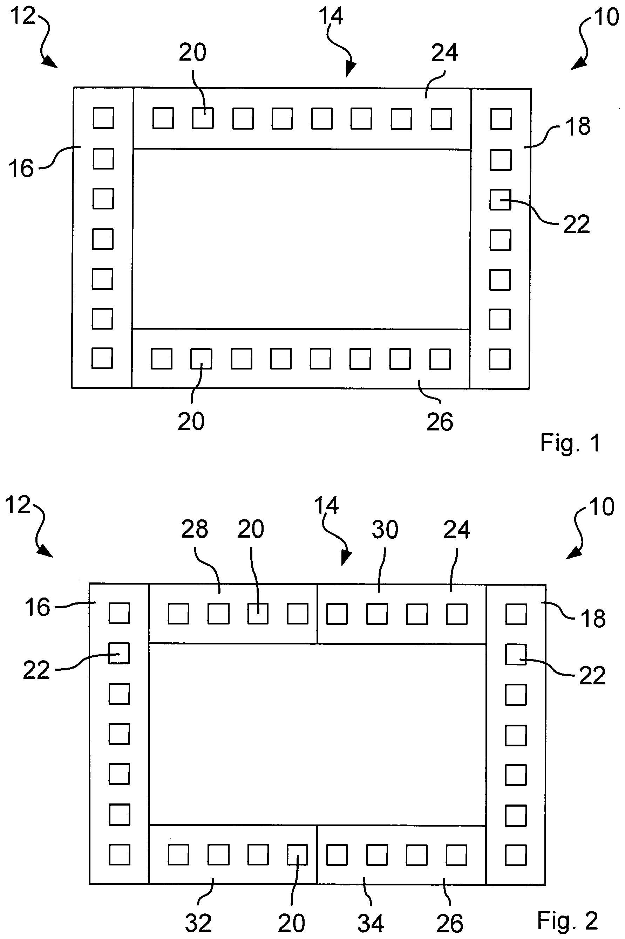

Fig. 1 zeigt eine erste Ausführungsform einer Radaranordnung 10 mit einer Antennenanordnung 12. Die Antennenanordnung 12 weist eine Sendeantenneneinrichtung 14 sowie eine erste Empfangsantenneinrichtung 16 und eine zweite Empfangsantenneinrichtung 18 auf.

Die erste Empfangsantenneinrichtung 16 und die zweite Empfangsantenneinrichtung 18 sind baugleich und sind derart an einander gegenüberliegenden Seiten der Sendeantenneneinrichtung 14 angeordnet, dass die Sendeantenneneinrichtung 14 zwischen der ersten Empfangsantenneinrichtung 16 und der zweiten Empfangsantenneinrichtung 18 liegt. Die erste Empfangsantenneinrichtung 16 und die zweite Empfangsantenneinrichtung 18 können, wie hier gezeigt, jeweils an der Sendeantenneneinrichtung 14 anliegend angeordnet sein.

Die Sendeantenneneinrichtung 14 weist eine Vielzahl von Sendeantennenelementen 20 auf, die, wie hier gezeigt, in einem rechtwinkligen Raster angeordnet sein können. Jedes der Sendeantennenelemente 20 ist mittels eines nicht gezeigten Verteilnetzwerks ansteuerbar.

Die Empfangsantenneinrichtungen 16, 18 weisen jeweils eine Vielzahl von Empfangsantennenelementen 22 auf, die entlang einer Gerade angeordnet sind.

Dadurch, dass die Empfangsantenneinrichtungen 16, 18 auf den Empfang von Radarsignalen spezialisierte Empfangsantennenelemente 22 aufweisen, kann auf komplexe Strukturen, beispielsweise auf T/R-Switches, verzichtet werden. Somit stellt die Bereitstellung von Empfangsantenneinrichtungen 16, 18 einen geringen Aufwand dar.

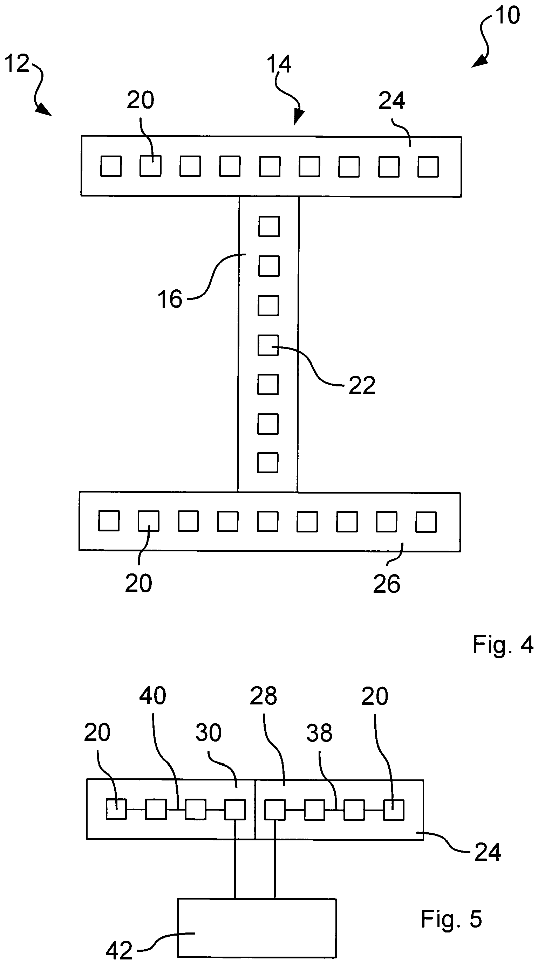

Die Sendeantennenelemente 20 werden von einer Ansteuerungseinrichtung 42, wie sie beispielhaft in Fig. 5 bis 7 dargestellt ist, mit Ansteuersignalen beschickt. Die Ansteuerungseinrichtung 42 erlaubt es, einen von den Sendeantennenelementen 20 der Sendeantenneneinrichtung 14 erzeugten Radarstrahl zu schwenken. Die Sendeantennenelemente 20 werden zu diesem Zweck von der Ansteuerungseinrichtung 42 derart angesteuert, dass sie eine Gruppenantenne bilden.

Die Sendeantenneneinrichtung 14 weist ein erstes Antennensegment 24 und ein zweites Antennensegment 26 auf. Jedes der Antennensegmente 24, 26 bildet eine eigene Gruppenantenne, wobei die von den Antennensegmenten 24,26 erzeugten Radarstrahlen mittels der Ansteuerungseinrichtung 42 separat schwenkbar sind. Die Antennensegmente 24, 26 sind voneinander beabstandet und parallel zueinander angeordnet. Die erste Empfangsantenneinrichtung 16 und die zweite Empfangsantenneinrichtung 18 sind ebenfalls voneinander beabstandet und parallel zueinander angeordnet. Die Empfangsantenneinrichtung 16, 18 und die Antennensegmente 24, 26 sind so angeordnet, dass jeweils ein Ende einer Empfangsantenneinrichtung 16, 18 und ein Ende eines Antennensegment 24, 26 aneinander angrenzen.

Die Antennensegmente 24, 26 und die Empfangsantenneinrichtungen 16, 18 bilden auf diese Weise einen Rahmen oder ein Parallelogramm, bei dem jeweils einander gegenüberliegende Seiten dieselbe Funktion erfüllen, um im Zusammenspiel die Radarleistung und Auflösung zu verbessern.

Die Antennensegmente 24, 26 weisen jeweils entlang einer Geraden angeordnete Sendeantennenelemente 20 auf. Die Sendeantennenelemente 20 sind zur Aussendung von Radarstrahlen geeignet, zum Empfang von Radarstrahlen jedoch nicht. Die Antennensegmente 24, 26 sind daher auch nicht darauf ausgelegt, Signale zu empfangen. Dadurch kann der Herstellungsaufwand, ähnlich wie in den Empfangsantenneinrichtungen 16, 18, gering gehalten werden, beispielsweise durch den Verzicht auf T/R-Switches. Die Antennensegmente 24, 26 sind kostengünstig und kompakt herstellbar.

Selbstverständlich ist es bei allen Ausführungsbeispielen möglich, die Empfangsantenneinrichtungen 16, 18 ausschließlich mit Empfangsantennenelementen 22 auszustatten.

Bei der in Fig. 2 gezeigten zweiten Ausführungsform sind die Antennensegmente 24, 26 jeweils in kleinere Antennengruppen unterteilt, die als Subsegmente 28, 30, 32, 34 bezeichnet werden. Die Subsegmente 28, 30, 32, 34 umfassen jeweils eine Hälfte der Sendeantennenelemente 20 ihres jeweiligen Antennensegments 24, 26. Es ist denkbar, die Sendeantennenelemente 20 in einem anderen Verhältnis auf die Subsegmente 28, 30, 32, 34 aufzuteilen. Es ist auch möglich, mehr als zwei Subsegmente 28, 30, 32, 34 je Antennensegment 24, 26, insbesondere drei, vier, mehr als drei oder mehr als vier Subsegmente 28, 30, 32, 34, vorzusehen.

Durch diese Unterteilung in mehrere Subsegmente 28, 30, 32, 34, die wieder jeweils als Gruppenantenne zusammenwirken und so angesteuert werden, ist es möglich, mehrere unterschiedliche Radarstrahlen gleichzeitig mit der Radaranordnung 10 zu erzeugen.

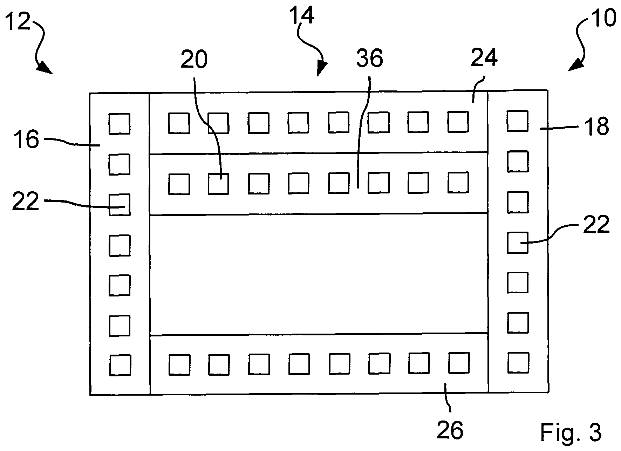

Zur Erhöhung der Reichweite und/oder zur Erhöhung der Auflösung der Radaranordnung 10 ist in der in Fig. 3 gezeigten Ausführungsform ein drittes Antennensegment 36, das in seinem Aufbau dem ersten und/oder dem zweiten Antennensegment 24, 26 ähnelt, vorgesehen. Das dritte Antennensegment 36 ist zwischen den ersten Antennensegment 24 und den zweiten Antennensegment 26 und parallel zu den Antennensegmenten 24, 26 angeordnet.

Das dritte Antennensegment 36 kann auch entfernt von dem ersten und dem zweiten Antennensegment 24, 26 angeordnet werden.

Weitere Antennensegmente können bei Bedarf hinzugefügt werden. Diese weiteren Antennensegmente bilden wieder Gruppenantennen, deren Radarstrahlen separat schwenkbar sind.

Jedes der Antennensegmente 24, 26, 36 kann in mehrere unabhängige Gruppenantennen, die auch Subsegmente 28, 30, 32, 34 genannt werden, aufgeteilt werden. Sofern lediglich ein sehr einfacher Aufbau gewünscht ist und auf eine Veränderung der Zuordnung der Sendeantennenelemente 20 zu den Subsegmenten 28, 30, 32, 34 nach der Herstellung verzichtet werden kann, ist es möglich, ein entsprechendes Verteilnetzwerk fest in die Antennensegmente 24, 26, 36 zu integrieren.

Bei der in Fig. 4 gezeigten vierten Ausführungsform weist die Antennenanordnung 12 neben der Sendeantenneneinrichtung 14 mit dem ersten Antennensegment 24 und dem zweiten Antennensegment 26 lediglich eine erste Empfangsantenneinrichtung 16 auf. Die Empfangsantenneinrichtung 16 ist senkrecht zu den Antennensegmenten 24, 26 angeordnet. Ein derartiger Aufbau ist besonders kostengünstig und einfach herzustellen und weist im Verhältnis zu seiner Komplexität eine verbesserte Auflösung und Reichweite auf.

In Fig. 5 ist beispielhaft für das erste Antennensegment 24 gezeigt, Sendeantennenelemente 20 mittels eines ersten Verteilnetzwerks 38 zu einem ersten Subsegment 28 und mittels eines zweiten Verteilnetzwerks 40 zu einem zweiten Subsegment 30 zu verbinden.

Zur Ansteuerung der Subsegmente 28, 30 ist eine Ansteuerungseinrichtung 42 vorgesehen. Sofern die Verteilnetzwerke 38, 40 bereits Einrichtungen zur Strahlsteuerung der Subsegmente 28, 30, beispielsweise Phasenschieber, aufweisen, kann die Ansteuerungseinrichtung 42 vergleichsweise einfach ausgeführt werden. So kann beispielsweise lediglich vorgesehen sein, die Strahlrichtung der Subsegmente 28, 30 mittels der Frequenz des abgestrahlten Signals zu steuern.

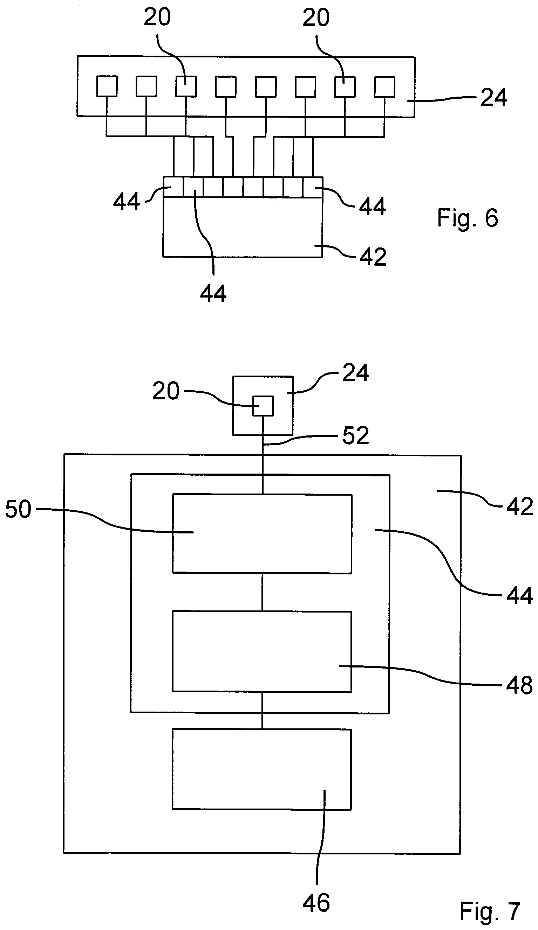

Das in der Fig. 6 gezeigte Ausführungsbeispiel ist dadurch, dass die Ansteuereinrichtung 42 jedes der Sendeantennenelemente 20 des Antennensegments 24 einzeln steuert, flexibler, aber auch im Aufbau komplexer. Die Ansteuerungseinrichtung 42 weist für jedes der Sendeantennenelemente 20 eine Ansteuerungsstufe 44 auf, die ein Ausgangssignal zur Ansteuerung des ihr jeweils zugeordneten Sendeantennenelements 20 bereitstellt.

In Fig. 7 ist der Aufbau der Ansteuerungseinrichtung 42 beispielhaft für ein Sendeantennenelement 20 des ersten Antennensegments 24 dargestellt. Die Ansteuerungseinrichtung 42 weist einen Steuerrechner 46 auf, der die Parameter des zu erzeugenden Ansteuerungssignals an einen Signalgenerator 48 übermittelt. Derartige Parameter können beispielsweise Frequenz, Phasenlage sowie Modulationsparameter umfassen.

Als Signalgenerator 48 wird in dem vorliegenden Ausführungsbeispiel ein direkter digitaler Synthesizer (direct digital synthesizer, DDS) verwendet. Der Signalgenerator 48 erzeugt eine digitale Beschreibung des Ansteuerungssignals, die von einem Digital-Analog-Konverter (DAC) 50 in das analoge Ansteuerungssignal umgewandelt wird. Dieses Ansteuerungssignal wird dann über ein Verteilnetzwerk 52 an das erste Antennensegment 24 und somit an das Sendeantennenelement 20 übertragen. Der Signalgenerator 48 und der Digital-Analog-Konverter 50 bilden zusammen die Ansteuerungsstufe 44.

Diese Anordnung ist nur eine von vielen Möglichkeiten. Die Ansteuerungseinrichtung 42 oder einzelne Teile davon können auch in die Antennensegmente 24, 26, 36 aufgenommen werden. Insbesondere der Signalgenerator 48 und/oder der Digital-Analog-Konverter 50 können in unmittelbarer Nähe ihres zugeordneten Sendeantennenelements 20 angeordnet werden.

Erfindungsgemäßen Ansteuerungseinrichtungen 42 ist gemeinsam, dass sie ein Ansteuerungssignal, typischerweise durch Phasensteuerung, derart erzeugen, dass die als Gruppenantenne zusammenwirkenden Sendeantennenelemente 20 einen Radarstrahl erzeugen, der schwenkbar ist (Strahlschwenkung). Jedes der Antennensegmente 24, 26 beziehungsweise jedes der Subsegmente 28, 30, 32, 34 wirkt dabei als separate Gruppenantenne zusammen und wird von der Ansteuerungseinrichtung 42 als separate Gruppenantenne angesteuert. Dadurch ist der von jedem Antennensegment 24, 26 oder Subsegment 28, 30, 32, 34 erzeugte Radarstrahl separat und autark schwenkbar.

Dadurch, dass die Sendeantennenelemente 20 in den einzelnen Antennensegmenten 24, 26 beziehungsweise Subsegmenten 28, 30, 32, 34 entlang einer Gerade angeordnet sind, sind die einzelnen Radarstrahl in jeweils in einer Ebene schwenkbar. Die Sendeantennenelemente 20 können entlang einer horizontal verlaufenden Gerade angeordnet werden, so dass die Strahlschwenkung entlang der Horizontalen durchführbar ist.

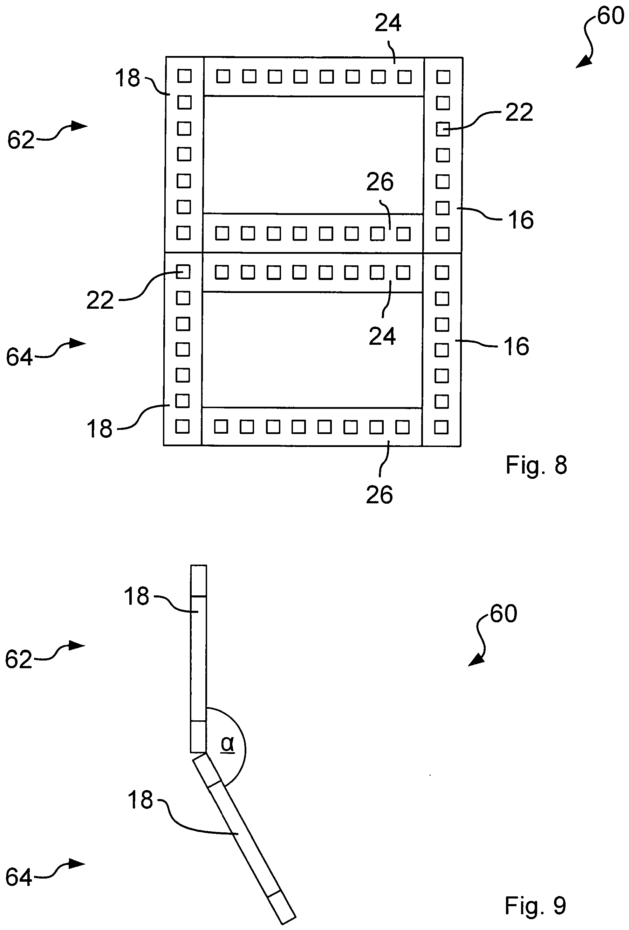

Die in Fig. 8 gezeigte Radaranordnung 60 für besondere Anforderungen weist eine erste Antennenanordnung 62 und eine zweite Antennenanordnung 64 auf. Die Antennenanordnungen 62, 64 entsprechen in ihrem Aufbau jeweils einer Antennenanordnung 12. Die Antennenanordnungen 62, 64 sind aneinander angrenzend angeordnet, so dass die Empfangsantennenelemente 22 der ersten Empfangsantenneinrichtungen 16 und der zweiten Empfangsantenneinrichtungen 18 jeweils paarweise auf Geraden in derselben Ebene liegen. Die Ausrichtung der Empfangsantenneinrichtungen 16, 18 ist also bei beiden Antennenanordnungen 62, 64 in der Draufsicht gleich. Die Antennensegmente 24, 26 sind parallel zueinander ausgerichtet.

Wie in Fig. 9 gezeigt, schließen die Antennenanordnungen 62, 64 zwischen sich einen Winkel a, hier ca. 150°, ein. Durch diese unterschiedliche Ausrichtung kann der für die Radaranordnung 60 sichtbare Bereich vergrößert und an die jeweilige Aufgabe der Radaranordnung 60 angepasst werden.

Das hier gesagte ist zwar teilweise zur Vermeidung von Wiederholungen lediglich auf das erste Antennensegment 24 bezogen, ist aber nicht nur auf das erste Antennensegment 24, sondern auf jedes beliebige Antennensegment 24, 26, 36 anwendbar.

Die Aufteilung in Subsegmente 28, 30, 32, 34 ist auch möglich, wenn die Sendeantenneneinrichtung 14 nicht nur aus einzelnen Antennensegmenten 24, 26, 36 besteht, die jeweils entlang einer gerade angeordnete Sendeantennenelemente 20 aufweisen, sondern ein Feld mit einer Vielzahl von in einem Raster angeordneten Sendeantennenelementen 20 aufweist.

Die Subsegmente 28, 30, 32, 34 müssen nicht zwangsläufig zusammenhängende Bereiche umfassen. Es ist beispielsweise ebenfalls möglich, die Sendeantennenelemente 20 abwechselnd unterschiedlichen Subsegmenten 28, 30, 32, 34 zuzuordnen. Dadurch können senkrechte oder waagerechte Subsegmente 28, 30, 32, 34 oder auch ein schachbrettartiges Muster erzeugt werden.

Die Empfangsantenneinrichtungen 16, 18 weisen Verbindungsmittel auf, mit denen die Empfangsantennenelemente 22 mit einer Empfangseinrichtung (nicht gezeigt) verbunden werden. Die Empfangseinrichtung analysiert die von den Empfangsantennenelementen 22 empfangenen Radarsignale und gewinnt daraus Informationen über Objekte, die Radarwellen oder Radarstrahlen reflektieren. Aus diesen Informationen kann die Empfangseinrichtung beispielsweise ein Radarbild konstruieren.

Jedes der Empfangsantennenelemente 22 kann mit einem eigenen Eingang der Empfangseinrichtung verbunden sein. Jeder Eingang weist zur Aufnahme der empfangenen Signale einen Analog-Digital-Konverter (ADC) auf, welcher einer Analyseeinrichtung der Empfangseinrichtung die empfangenen Signale in digitalisierter Form bereitstellt.

Um eine möglichst gute Qualität der Analyse zu gewährleisten ist es bevorzugt, wenn die Empfangsantennenelemente 22 einer der Empfangsantenneinrichtungen 16, 18 jeweils gleichzeitig phasensynchron abgetastet werden können. Daher ist es bevorzugt, wenn die Verbindungsmittel der Empfangsantenneinrichtungen 16, 18 auf der Strecke zwischen den Empfangsantennenelementen 22 und der Empfangseinrichtung eine nach Möglichkeit für alle Empfangsantennenelemente 22 identische Laufzeit bzw. Phasenverschiebung auf dem Übertragungsweg sicherstellt. Sind Abweichungen der Laufzeit zwischen den Verbindungsmitteln unvermeidlich, so können diese Abweichungen bis zu einem gewissen Grad bei der Analyse berücksichtigt und dadurch ausgeglichen beziehungsweise herausgerechnet werden.

Die vorliegende Radaranordnung 10, 60 kann mit geringem technischem Aufwand sowohl große Reichweiten erzielen, als auch im Nahbereich eine leistungsfähige Bildgebung liefern.

Die multifunktionale Radaranordnung 10, 60 bildet einen kompakten Radarsensor, der für alle im Flugbetrieb relevanten Radarfunktionen eingesetzt werden kann. Durch die Verwendung von AESA-Radarkomponenten wird die Reichweite und damit der Abbildungsbereich eines klassischen MIMO-Radar vergrößert. Die kombinierte Lösung ist wesentlich kostengünstiger, da die klassische AESA-Anordnung in der Elementezahl auf zwei zeilenartige Antennensegmente 24, 26 reduziert werden kann und durch das Hinzufügen von wiederum nur zwei zeilenartigen Empfangsantenneinrichtungen 16, 18 trotzdem eine vollständige 3-D-Bildrekonstruktion durchgeführt werden kann. Somit werden die Reichweitenvorteile von AESA mit den Vorteilen der MIMO-Anordnung kombiniert.

In der ersten Ausführungsform der Erfindung weist die Antennenanordnung 12 eine Form auf, welche einer MIMO-Radaranordnung ähnelt (Fig. 1). Die Sendeantennenelemente 20 der Sendeantenneneinrichtung 14, die in zwei Zeilen angeordnet sind, sind jeweils eindimensional elektronisch schwenkbar und erlauben dadurch gegenüber einer klassischen Anordnung einen Reichweitengewinn. Dadurch, dass die erste Empfangsantenneinrichtung 16 und die zweite Empfangsantenneinrichtung 18 zu den Antennensegmenten 24, 26 der Sendeantenneneinrichtung 14 senkrecht angeordnet sind, ist eine vollständige 3-D-Bildrekonstruktion möglich.

Der Nachteil der reinen MIMO-Radaranordnung mit rein orthogonalen Sende- und Empfangsantennenelementen und deren zugehörige Ansteuerung liegt in der limitierten Reichweite, da die Sendeantennenelemente dort keine Gruppenantennen bilden und nicht als solche angesteuert werden. Dadurch können diese keinen TX-Gewinn aus der Zusammenschaltung von Sendeantennenelementen generieren.

Die zweite Ausführungsform der Radaranordnung 10, 60 ist dadurch gekennzeichnet, dass wenigstens eines der Antennensegmente 24, 26 in mehrere Subsegmente 28, 30, 32, 34 unterteilt wird, wobei jedes Subsegment 28, 30, 32, 34 ein eigenes Phasenzentrum hat und autark schwenkbar ist. Die Unterteilung in Subsegmente 28, 30, 32, 34 ist mittels Software während des Betriebs steuerbar, wodurch das System an verschiedene Reichweiten und Auflösungsanforderungen dynamisch adaptiert werden kann. Jedes der Antennensegmente 24, 26 ist separat steuerbar, wodurch Bildsegmente jeweils mit besonderen Anforderungen hinsichtlich Reichweite und Auflösung bearbeitet werden können.

Die dritte Ausführungsform der Radaranordnung 10, 60 ist in gewisser Weise eine Zwischenform. Durch das dritte Antennensegment 36 kann gleichzeitig eine Reichweitenerhöhung als auch eine Auflösungserhöhung erreicht werden.

Bei der fünften Ausführungsform der Radaranordnung 10, 60 werden mehrere Antennenanordnungen 62, 64 in einem Winkel zueinander angeordnet. In Abhängigkeit des Öffnungswinkels der Sendeantennenelemente 20 und der Winkelstellung der Antennenanordnungen 62, 64 zueinander kann wahlweise ein Bereich mit erhöhter Auflösung (Überlappungsbereich der beiden Antennenanordnungen 62, 64) oder ein sehr großer Abbildungsbereich (ohne Überlappung der Erfassungsbereiche) ausgebildet werden.

Sofern jeweils nur eine Blickrichtung der Radaranordnung 10, 60 benötigt wird, können die Antennenanordnungen 62, 64 an der gleichen Ansteuerungseinrichtung 42 betrieben werden. Ein Anwendungsfall dafür sind Radare für Flugzeuge, die in einem Flugmodus nach vorne und in einem Landemodus schräg nach vorne unten ausgerichtet sein sollen.

In der digitalen Auslegungsvariante der Radaranordnung 10, 60, bei der die Strahlschwenkung nicht durch analoge Phasenschieber erfolgt, sondern durch digitale Strahlschwenkung, bei der an jedes sendende Antennenelement 20 ein Digital-Analog-Konverter (DAC) 50 und als Signalgenerator 48 ein direkter Digital-Synthesizer (DDS) angeschlossen wird, kann diese so betrieben werden, dass bei Kurzreichweitenbetrieb keine Strahlschwenkung erfolgt, sondern alle Sender mit einer entsprechenden Kodierung, beispielsweise OFDM, betrieben werden, wodurch eine vollständige Abbildung nach nur einem Messzyklus möglich wird.

Die Sendeantennenelemente 20 der Sendeantenneneinrichtung 14 können in einem Raster angeordnet sein. In diesem Fall kann die Sendeantenneneinrichtung 14 als Antennenrastereinrichtung bezeichnet werden.

Die Antennensegmente 24, 26, 36 können, wenn ihre Sendeantennenelemente 20 jeweils entlang einer Zeile dieses Rasters der Sendeantenneneinrichtung 14 oder allgemein entlang einer Gerade angeordnet sind, auch als Antennenelementzeilen (antenna line) bezeichnet werden.

Die Empfangsantennenelemente 22 können entlang einer Gerade angeordnet sein. Die Empfangsantenneinrichtungen 16, 18 können in diesem Fall auch als Empfangszeileneinrichtungen (antenna line) bezeichnet werden.

Die Antennensegmente 24, 26, 36 können derart angeordnet sein, dass sie jeweils an einen Endbereich der ersten Empfangsantenneinrichtung 16 und an einen Endbereich der zweiten Empfangsantenneinrichtung 18 angrenzen. Diese Anordnung in Form eines Rechtecks ist vergleichsweise stabil und einfach zu befestigen.

### Bezugszeichenliste

- 10: Radaranordnung
- 12: Antennenanordnung
- 14: Sendeantenneneinrichtung
- 16: Erste Empfangsantenneneinrichtung
- 18: Zweite Empfangsantenneneinrichtung
- 20: Sendeantennenelement
- 21: Antennenelement
- 22: Empfangsantennenelement
- 24: Erstes Antennensegment
- 26: Zweites Antennensegment
- 28: Erstes Subsegment
- 30: Zweites Subsegment
- 32: Drittes Subsegment
- 34: Viertes Subsegment
- 36: Drittes Antennensegment
- 38: Erstes Verteilnetzwerk
- 40: Zweites Verteilnetzwerk
- 42: Ansteuerungseinrichtung
- 44: Ansteuerungsstufe
- 46: Steuerrechner
- 48: Signalgenerator
- 50: Digital-Analog-Konverter
- 52: Verteilnetzwerk
- 60: Radaranordnung
- 62: Erste Antennenanordnung
- 64: Zweite Antennenanordnung

## Patentansprüche

1. Radaranordnung (10, 60) zum Abstrahlen und/oder Empfangen wenigstens
eines Radarstrahls, aufweisend
eine Antennenanordnung (12, 62, 64), die
eine Sendeantenneneinrichtung (14) mit einer Mehrzahl von Sendeantennenelementen (20), aufweist,
wobei die Radaranordnung (10, 60) eine Ansteuerungseinrichtung (42) zur Erzeugung von Ansteuersignalen für die Sendeantennenelemente (20) der Sendeantenneneinrichtung (14) aufweist,
wobei die Antennenanordnung (12, 62, 64) eine erste Empfangsantenneneinrichtung (16) aufweist, die eine Mehrzahl von Empfangsantennenelementen (22) aufweist, wobei
die Sendeantenneneinrichtung (14) ein erstes Antennensegment (24) und ein zweites Antennensegment (26) aufweist, die voneinander beabstandet angeordnet sind, wobei die Antennensegmente (24, 26) jeweils eine Mehrzahl von entlang einer Gerade angeordneten Sendeantennenelementen (20) aufweisen,
und wobei
jedes der Antennensegmente (24, 26) durch ein Zusammenwirken der Sendeantennenelemente (20) jeweils eine Gruppenantenne bildet, mit der jeweils ein gemeinsamer Radarstrahl erzeugbar ist, **dadurch gekennzeichnet, dass** die Ansteuerungseinrichtung (42) derart ausgestaltet ist, dass durch die Bereitstellung der Ansteuersignale, jeder der von den Antennensegmenten (24, 26) erzeugten Radarstrahlen separat schwenkbar ist.

2. Radaranordnung nach Anspruch 1, **dadurch gekennzeichnet, dass** die Antennenanordnung (12, 62, 64) eine zweite Empfangsantenneneinrichtung (18) aufweist.

3. Radaranordnung nach Anspruch 2, **dadurch gekennzeichnet, dass** die Empfangsantenneneinrichtungen (16, 18) an einander gegenüberliegenden Seiten der Sendeantenneneinrichtung (14) angeordnet sind.

4. Radaranordnung nach einem der voranstehenden Ansprüche, **dadurch gekennzeichnet, dass** die Sendeantenneneinrichtung (14) ein drittes Antennensegment (36) aufweist.

5. Radaranordnung nach Anspruch 4, **dadurch gekennzeichnet, dass** das dritte Antennensegment (36) zwischen dem ersten Antennensegment (24) und dem zweiten Antennensegment (26) angeordnet ist.

6. Radaranordnung nach einem der voranstehenden Ansprüche, **dadurch gekennzeichnet, dass** wenigstens eines der Antennensegmente (24, 26, 36) mehrere Subsegmente (28, 30, 32, 34) aufweist, die jeweils eine Gruppenantenne bilden, wobei die Ansteuerungseinrichtung (42) derart ausgestaltet ist, dass jedes der Subsegmente (28, 30, 32, 34) separat schwenkbar ist.

7. Radaranordnung nach einem der Ansprüche 1 bis 8, **gekennzeichnet durch** eine Ansteuerungseinrichtung (42), die für jedes der Sendeantennenelemente (20) eine Signalformungseinrichtung (48, 50) aufweist.

8. Radaranordnung nach einem der voranstehenden Ansprüche, **dadurch gekennzeichnet, dass** mehrere der Sendeantennenelemente (20) durch ein Verteilnetzwerk (38, 40) miteinander zu einem Antennensegment und/oder einem Subsegment (24, 26, 28, 30, 32, 34, 36) verbunden sind.

9. Radaranordnung nach einem der voranstehenden Ansprüche, **gekennzeichnet durch** wenigstens zwei Antennenanordnungen (12, 62, 64).

10. Radaranordnung nach Anspruch 9, **dadurch gekennzeichnet, dass** die Antennenanordnungen (12, 62, 64) aneinander angrenzend angeordnet sind.

11. Radaranordnung nach Anspruch 9 oder 10, **dadurch gekennzeichnet, dass** die Antennenanordnungen (12, 62, 64) zwischen sich einen Winkel (α) zwischen 185° und 270° einschließen.

12. Radaranordnung nach Anspruch 9 oder 10, **dadurch gekennzeichnet, dass** die Antennenanordnungen (12, 62, 64) zwischen sich einen Winkel (α) zwischen 90° und 170° einschließen.

## Claims

1. Radar assembly (10, 60) for emitting and/or receiving at least one radar beam, comprising an antenna assembly (12, 62, 64) comprising a transmitting antenna device (14) having a plurality of transmitting antenna elements (20),
wherein the radar assembly (10, 60) comprises a driving device (42) for generating drive signals for the transmitting antenna elements (20) of the transmitting antenna device (14),
wherein the antenna assembly (12, 62, 64) comprises a first receiving antenna device (16) comprising a plurality of receiving antenna elements (22), wherein the transmitting antenna device (14) comprises a first antenna segment (24) and a second antenna segment (26), which are arranged in a manner spaced apart from one another, wherein the antenna segments (24, 26) in each case comprise a plurality of transmitting antenna elements (20) arranged along a straight line,
and wherein
each of the antenna segments (24, 26), as a result of an interaction of the transmitting antenna elements (20), in each case forms a group antenna by which a common radar beam is in each case generatable,
**characterized in that**
the driving device (42) is designed in such a way that, as a result of the provision of the drive signals, each of the radar beams generated by the antenna segments (24, 26) is separately pivotable.

2. Radar assembly according to Claim 1, **characterized in that** the antenna assembly (12, 62, 64) comprises a second receiving antenna device (18).

3. Radar assembly according to Claim 2, **characterized in that** the receiving antenna devices (16, 18) are arranged on mutually opposite sides of the transmitting antenna device (14).

4. Radar assembly according to any of the preceding claims, **characterized in that** the transmitting antenna device (14) comprises a third antenna segment (36).

5. Radar assembly according to Claim 4, **characterized in that** the third antenna segment (36) is arranged between the first antenna segment (24) and the second antenna segment (26).

6. Radar assembly according to any of the preceding claims, **characterized in that** at least one of the antenna segments (24, 26, 36) comprises a plurality of subsegments (28, 30, 32, 34) which in each case form a group antenna, wherein the driving device (42) is designed in such a way that each of the subsegments (28, 30, 32, 34) is separately pivotable.

7. Radar assembly according to any of Claims 1 to 8, **characterized by** a driving device (42) comprising a signal shaping device (48, 50) for each of the transmitting antenna elements (20).

8. Radar assembly according to any of the preceding claims, **characterized in that** a plurality of the transmitting antenna elements (20) are connected to one another by a distribution network (38, 40) to form an antenna segment and/or a subsegment (24, 26, 28, 30, 32, 34, 36).

9. Radar assembly according to any of the preceding claims, **characterized by** at least two antenna assemblies (12, 62, 64).

10. Radar assembly according to Claim 9, **characterized in that** the antenna assemblies (12, 62, 64) are arranged in a manner adjoining one another.

11. Radar assembly according to Claim 9 or 10, **characterized in that** the antenna assemblies (12, 62, 64) form an angle (α) of between 185° and 270° between them.

12. Radar assembly according to Claim 9 or 10, **characterized in that** the antenna assemblies (12, 62, 64) form an angle (α) of between 90° and 170° between them.

## Revendications

1. Système de radar (10, 60) pour l'émission et/ou la réception d'au moins un faisceau radar, comportant un système d'antenne (12, 62, 64), lequel comporte un dispositif d'antenne émettrice (14) doté d'une pluralité d'éléments d'antenne émettrice (20),
le système de radar (10, 60) comportant un dispositif de commande (42) pour la production de signaux de commande pour les éléments d'antenne émettrice (20) du dispositif d'antenne émettrice (14),
dans lequel le système d'antenne (12, 62, 64) comporte un premier dispositif d'antenne réceptrice (16), lequel comporte une pluralité d'éléments d'antenne réceptrice (22), dans lequel
le dispositif d'antenne émettrice (14) comporte un premier segment d'antenne (24) et un deuxième segment d'antenne (26), lesquels sont agencés à distance l'un de l'autre, dans lequel les segments d'antenne (24, 26) comportent respectivement une pluralité d'éléments d'antenne émettrice (20) agencés le long d'une droite, et dans lequel chacun des segments d'antenne (24, 26) forme respectivement une antenne-réseau par une coopération des éléments d'antenne émettrice (20), avec laquelle un faisceau radar commun respectif peut être produit,
**caractérisé en ce que** le dispositif de commande (42) est configuré de façon à ce que chacun des faisceaux radar produits par les segments d'antenne (24, 26) peut pivoter séparément par la fourniture des signaux de commande.

2. Système de radar selon la revendication 1, **caractérisé en ce que** le système d'antenne (12, 62, 64) comporte un deuxième dispositif d'antenne réceptrice (18).

3. Système de radar selon la revendication 2, **caractérisé en ce que** les dispositifs d'antenne réceptrice (16, 18) sont agencés sur des côtés du dispositif d'antenne émettrice (14) opposés l'un à l'autre.

4. Système de radar selon l'une des revendications ci-dessus, **caractérisé en ce que** le dispositif d'antenne émettrice (14) comporte un troisième segment d'antenne (36) .

5. Système de radar selon la revendication 4, **caractérisé en ce que** le troisième segment d'antenne (36) est agencé entre le premier segment d'antenne (24) et le deuxième segment d'antenne (26).

6. Système de radar selon l'une des revendications ci-dessus, **caractérisé en ce qu'**au moins un des segments d'antenne (24, 26, 36) comporte plusieurs sous-segments (28, 30, 32, 34), lesquels forment respectivement une antenne-réseau, dans lequel le dispositif de commande (42) est configuré de façon à ce que chacun des sous-segments (28, 30, 32, 34) peut pivoter séparément.

7. Système de radar selon l'une des revendications 1 à 8, **caractérisé par** un dispositif de commande (42), lequel comporte un dispositif de mise en forme d'onde (48, 50) pour chacun des éléments d'antenne émettrice (20).

8. Système de radar selon l'une des revendications ci-dessus, **caractérisé en ce que** plusieurs des éléments d'antenne émettrice (20) sont, par un réseau de distribution (38, 40), raccordés entre eux pour former un segment d'antenne et/ou un sous-segment (24, 26, 28, 30, 32, 34, 36).

9. Système de radar selon l'une des revendications ci-dessus, **caractérisé par** au moins deux systèmes d'antenne (12, 62, 64).

10. Système de radar selon la revendication 9, **caractérisé en ce que** les systèmes d'antenne (12, 62, 64) sont agencés contigus l'un à l'autre.

11. Système de radar selon la revendication 9 ou 10, **caractérisé en ce que** les systèmes d'antenne (12, 62, 64) forment entre eux un angle (α) compris entre 185° et 270°.

12. Système de radar selon la revendication 9 ou 10, **caractérisé en ce que** les systèmes d'antenne (12, 62, 64) forment entre eux un angle (α) compris entre 90° et 170°.
